# EUROPÄISCHE PATENTSCHRIFT

(11) **EP 3 561 665 B1**
(45) Veröffentlichungstag und Bekanntmachung des Hinweises auf die Patenterteilung: **26.01.2022**
(21) Anmeldenummer: 18168773.2
(22) Anmeldetag: 23.04.2018
(51) Int. Cl.: G06F 8/36, G06F 16/93

(54) **VERFAHREN UND VORRICHTUNG ZUM RECHNERGESTÜTZTEN KONFIGURIEREN EINES TECHNISCHEN SYSTEMS**
METHOD AND DEVICE FOR THE COMPUTER-ASSISTED CONFIGURING OF A TECHNICAL SYSTEM
PROCÉDÉ ET DISPOSITIF DE CONFIGURATION ASSISTÉE PAR ORDINATEUR D'UN SYSTÈME TECHNIQUE

(43) Veröffentlichungstag der Anmeldung: 30.10.2019
(73) Patentinhaber: Siemens Aktiengesellschaft, 80333 München (DE)
(72) Erfinder: Fiegert, Michael, 81739 München (DE); Feiten, Wendelin, 85579 Neubiberg (DE)

(56) Entgegenhaltungen:
- US-A1- 2009 276 201
- US-A1- 2014 108 418
- US-A1- 2016 210 126
- US-A1- 2017 060 555
- Anonymous: "Software testing - Wikipedia", , 27. März 2018 (2018-03-27), XP055536094, Gefunden im Internet: URL:https://en.wikipedia.org/w/index.php?t itle=Software_testing&oldid=832674944 [gefunden am 2018-12-18]

## Beschreibung

Die Erfindung betrifft ein Verfahren und eine Vorrichtung zum rechnergestützten Konfigurieren eines technischen Systems.

Ein technisches System, z.B. ein Gerät oder ein System aus Geräten oder ein Softwaremodul, kann aus einzelnen Komponenten, wie z.B. Hardware- oder Software-Komponenten, konfiguriert werden, wobei die Komponenten beispielsweise einzeln austauschbar sind. Dies ermöglicht eine flexible Konstruktion und Konfiguration, insbesondere wenn neue oder aktualisierte Versionen einer Komponente verfügbar sind. Um ein technisches System aufzurüsten oder zu aktualisieren oder nach einer Vorgabe von Grund auf neu zu konfigurieren, können einzelne Komponenten durch verbesserte, beispielsweise leistungsstärkere, ersetzt werden. Beispielsweise kann ein Algorithmus zum Steuern eines technischen Systems aus einzelnen Komponenten bestehen.

Eine Suche nach einer besseren Komponente bedarf einer Spezifikation der zu ersetzenden Komponente, die eine Funktion, Anforderung, Eigenschaft oder einen Standard der Komponente spezifiziert. Beispielsweise kann anhand der Spezifikation eine leistungsstärkere Komponente ermittelt werden, um das System neu zu konfigurieren. So kann eine Suche nach einer verbesserten Komponente, um beispielsweise die Systemleistung oder Effizienz zu erhöhen, über das Internet erfolgen. Dies ist in der Regel zeitlich aufwändig und kann häufig nicht praktikabel sein, insbesondere wenn die gefundenen Komponenten zunächst eine Funktionsprüfung durchlaufen müssen. Insbesondere ist häufig die Menge an öffentlich beschriebenen und verfügbaren Komponenten unüberschaubar und wird z.B. fast täglich aktualisiert. Außerdem kann eine Suche anhand einer vorgegebenen technischen Spezifikation selbst eingeschränkt sein, so dass alternative Komponenten nicht einfach gefunden werden können. Eine Optimierung bezüglich beispielsweise der Leistung, des Energieverbrauchs, der Effizienz, oder der Qualität eines Erzeugnisses etc. eines technischen Systems kann somit häufig nicht einfach und/oder zeitnah erfolgen.

Aus US 2014/108418 A1 ist ein Verfahren bekannt, welches eine semantische Suche nach Sourcecode gemäß einer Spezifikation eines Programmierers ermöglicht. Es wird mindestens ein Dokument identifiziert, das beispielsweise der Spezifikation entspricht und das Sourcecode umfasst, und ausgegeben.

US 2017/060555 A1 offenbart ein Verfahren zum Verlinken von ausführbaren Codeteilen, die aus natürlichsprachigen Textquellen ermittelt werden.

US 2009/276201 A1 offenbart das Konfigurieren einer Testvorrichtung für ein zu testendes Gerät, das mehrere Komponenten umfasst, mittels einer Simulation.

Es ist eine Aufgabe der Erfindung eine einfache Möglichkeit zu schaffen, auf schnelle und einfache Weise, neue oder alternative Komponenten für eine verbesserte Konfiguration eines technischen Systems zu ermitteln.

Die Aufgabe wird gelöst durch ein Verfahren mit den Merkmalen des Patentanspruchs 1, durch eine Vorrichtung des Patentanspruchs 12, durch ein Computerprogrammprodukt nach Patentanspruch 13 und ein computerlesbares Speichermedium nach Patentanspruch 14 . Vorteilhafte Ausführungsformen und Weiterbildungen der Erfindung sind in den abhängigen Ansprüchen angegeben.

Das Verfahren ist beispielsweise vorteilhaft, da eine Suche nach neuen, verbesserten und/oder alternativen Komponenten für ein technisches System automatisch und effizient durchgeführt werden kann. Dazu kann eine Spezifikation für eine Komponente als Sucheingabe für ein erstes Suchverfahren vorgegeben werden, welche beispielsweise Angaben zu einer zu ersetzende Komponente umfasst.

Die Spezifikation kann insbesondere Daten, wie z.B. Stichworte, die dem technischen System und/oder der Komponente zugeordnet sind, umfassen, welche dem ersten Suchverfahren übergeben werden können. Mittels der Spezifikation wird die Suche initiiert und kann beispielsweise eingeschränkt und/oder verfeinert werden. Die Spezifikation kann insbesondere Angaben über Eigenschaften einer zu findenden Komponente umfassen. Beispielsweise kann eine Spezifikation derart gewählt werden, dass eine gefundene Komponente Anforderungen der Einbindung in das technische System erfüllt, wobei die spezielle Ausführungsform der Komponente, wie z.B. Material, nicht spezifiziert wird.

Das erfindungsgemäße Verfahren ist insbesondere vorteilhaft, da mittels einer ersten Suche ein erster Textdatensatz aus einer Vielzahl an Textdatensätzen gefunden werden kann, der mindestens einen Teil der vorgegebenen Spezifikation umfasst und beispielsweise eine neue oder alternative Komponente beschreibt oder umschreibt. Es kann anhand des ersten Textdatensatz eine Komponente ermittelt werden, d.h. beispielsweise eine Beschreibung der Komponente oder diese selbst bereitgestellt werden. In anderen Worten, aus dem ersten Textdatensatz kann eine Komponente abgeleitet werden. Der erste Textdatensatz kann an ein zweites Suchverfahren übermittelt werden. Abhängig von diesem ersten Textdatensatz, beispielsweise anhand eines Verweises oder Hinweises im ersten Textdatensatz, kann mittels des zweiten Suchverfahrens ein zweiter Textdatensatz gefunden werden, der eine Implementierungs- und/oder Ausführungsinformation oder eine Anleitung der Komponente umfasst. Es kann automatisch nach neuen oder alternativen Komponenten für das technische System gesucht werden, um diese für eine Konfiguration des technischen Systems zu nutzen. Die Kombination der ersten und zweiten Suche ermöglicht beispielsweise, auf einfache und schnelle Weise eine neue, verfügbare Komponente für das technische System zu ermitteln und mögliche Implementierungs- oder Ausführungsvarianten dazu zu erhalten. Insbesondere können mehrere zweite Textdatensätze zu einem ersten Textdatensatz gefunden werden, so dass mehrere Implementierungs- und/oder Ausführungsinformationen zu einer Komponente vorliegen.

Eine Komponente für ein technisches System kann beispielsweise als Software- und/oder als Hardwarekomponente ausgebildet sein. Unter Komponente ist insbesondere ein Teil eines technischen Systems zu verstehen, welches austauschbar und/oder separat konfigurierbar ist.

Mit dem ersten Suchverfahren und dem zweiten Suchverfahren können insbesondere derselbe und/oder verschiedene Dokumentenserver angesteuert werden. Ein erster und/oder zweiter Dokumentenserver kann beispielsweise ein, über das Internet, öffentlich zugänglicher Publikationsserver, oder ein digitales Archiv, wie z.B. ein Repository, oder eine Sammlung von weltweit zugänglichen Dokumenten sein. Vorzugsweise umfasst ein Dokumentenserver Dateien im Textformat, wie z.B. im Portable Document Format.

Das erste Suchverfahren und das zweite Suchverfahren können beispielsweise gleichartig ausgestaltet sein oder als ein kombiniertes Suchverfahren zusammengefasst werden. Insbesondere kann das zweite Suchverfahren abhängig vom Suchergebnis des ersten Suchverfahrens eine Suche durchführen. Beispielsweise kann das erste Suchverfahren eine Stichwortsuche umfassen, wobei eine vorgegebene Spezifikation als Sucheingabe eingelesen wird. Das zweite Suchverfahren kann insbesondere derart ausgebildet sein, dass damit ein dem ersten Textdatensatz ähnlicher und/oder zugeordneter zweiter Textdatensatz gefunden wird, der vorzugsweise eine Implementierungs- und/oder Ausführungsinformation für die Komponente umfasst. In anderen Worten, mittels des ersten und des zweiten Suchverfahrens können ein Textdatensatz, der eine Komponente für ein technisches System beschreibt, und ein weiterer Textdatensatz, der Zusatzinformationen zu dieser Komponente umfasst, ermittelt werden.

Ein Textdatensatz kann insbesondere ein Textdokument sein, d.h. er ist textbasiert bzw. umfasst Text in natürlicher Sprache, wie z.B. eine wissenschaftliche Publikation, eine Veröffentlichung, ein Bericht, eine technische Spezifikation, eine Beschreibung oder eine Verkaufsanzeige. Ein Textdatensatz kann des Weiteren Tabellen, Figuren und/oder Verweise, wie z.B. Hyperlinks, auf andere Textdatensätze umfassen. Ein Textdatensatz kann beispielsweise Programmiercode und/oder ein Anleitung dafür umfassen.

Ein erster Textdatensatz kann beispielsweise eine Komponente für ein technisches System beschreiben und/oder umschrieben und/oder darauf verweisen. Aus dem ersten Textdatensatz kann vorzugsweise eine Komponente abgeleitet werden. Der erste Textdatensatz kann insbesondere über Hyperlinks mit einem zweiten Textdatensatz verknüpft sein. Eine derartige Zuordnung kann beispielsweise vom zweiten Suchverfahren ermittelt werden. Beispielsweise kann der erste Textdatensatz, insgesamt oder teilweise, als Sucheingabe für das zweite Suchverfahren genutzt werden.

Eine Implementierungs- und/oder Ausführungsinformation für eine Komponente kann vorzugsweise Anleitungen und Angaben zur Installation, Inbetriebnahme, Prüfung und Leistung der Komponente umfassen, so dass damit eine schnelle und einfache Konfiguration des technischen Systems mit der Komponente ermöglicht werden kann. Beispielsweise kann mittels des zweiten Suchverfahrens eine Dokumentensammlung oder ein Repository durchsucht werden, das Implementierungs-und/oder Ausführungsinformation für Komponenten umfasst. Beispielsweise kann in einem zweiten Textdatensatz eine Implementierungs- und/oder Ausführungsinformation für eine Softwarekomponente als eine README-Datei vorliegen. Es kann beispielsweise ein Teil des zweiten Textdatensatz auch einen Programmcode einer Softwarekomponente umfassen. Für eine Hardware-Komponente kann beispielsweise eine Bedienungs- oder Bauanleitung vorliegen.

Es kann zusätzlich zum Bereitstellen des ersten und/oder zweiten Textdatensatzes und der Komponente eine Nachricht, wie z.B. eine Email oder ein Log-Eintrag, über das Suchergebnis des ersten und/oder zweiten Suchverfahrens ausgegeben werden. Das erfindungsgemäße Verfahren kann beispielsweise keinen ersten und/oder zweiten Textdatensatz ausgeben, wenn das erste oder zweite Suchverfahren kein Suchergebnis liefert. Es kann beispielsweise daraufhin die Spezifikation derart angepasst werden, dass das Verfahren Ergebnisse liefert, und/oder eine Nachricht über das erzielte Suchergebnis ausgegeben werden.

In einer vorteilhaften Ausführungsform kann das erste Suchverfahren als ein Verfahren zur maschinellen Verarbeitung natürlicher Sprache konfiguriert werden, wobei damit anhand mindestens eines Teils eines Textdatensatzes ein zu diesem Textdatensatz ähnlicher und/oder zugeordneter Textdatensatz ermittelt werden kann.

Das erste und/oder zweite Suchverfahren kann beispielsweise mittels eines Trainingstextdatensatzes darauf trainiert sein, eine Ähnlichkeit und/oder eine Zusammengehörigkeit von einzelnen Wörtern und/oder Textpassagen eines Textdatensatzes zu ermitteln. Basierend auf Verfahren zur maschinellen Verarbeitung natürlicher Sprache, auch bekannt als "Natural Language Processing, wie zum Beispiel "Word embeddings", "Topic Models", "Relation Extraction", kann beispielsweise anhand des ersten Textdatensatzes ein zweiter Textdatensatz ermittelt werden, welcher dem ersten ähnlich ist, d.h. einen ähnlichen Inhalt umfasst, und/oder diesem, z.B. über einen Hyperlink oder über eine semantische oder logische Verknüpfung, zugeordnet ist. Es kann beispielsweise anhand des Verfahrens zur maschinellen Verarbeitung natürlicher Sprache eine Verknüpfung oder ein Zusammenhang zwischen dem ersten und dem zweiten Textdatensatz ermittelt werden, z.B. eine gemeinsame Schnittmenge von Autorennamen. Dies kann dazu genutzt werden, schneller einen zweiten Textdatensatz mit Implementierungs- und/oder Ausführungsinformation für eine im ersten Textdatensatz beschriebenen Komponente zu finden, ohne einen direkten Verweis im ersten Textdatensatz zu benötigen. Insbesondere können so auch weitere, alternative zweite Textdatensätze ermittelt werden.

In einer weiteren vorteilhaften Ausführungsform kann die vorgegebene Spezifikation einen Anwendungszweck und/oder eine Funktion und/oder eine Schnittstelle und/oder einen Standard einer Komponente für ein technisches System angeben.

Eine Komponente kann beispielsweise durch eine Schnittstelle und/oder eine Betriebsweise und/oder eine Funktion und/oder eine Ausgestaltung und/oder einen Datenverarbeitungsweise und/oder einen Standard und/oder eine Norm derart charakterisiert sein, dass daraus eine passende Komponente für ein technisches System ermittelt werden kann. Beispielsweise kann die vorgegebene Spezifikation für die Suche eines ersten Textdatensatzes eine dieser Angaben umfassen. Mittels einer ersten Suche nach einem vorgegebenen Anwendungszweck und/oder einer Funktion und/oder einem Standard können vorzugsweise alternative Komponenten gefunden werden. Beispielsweise kann als ein Standard oder eine Norm für eine Algorithmus-Komponente ein Benchmark-Datensatz gewählt werden, um Komponenten zu finden, die ebenso diesen Benchmark-Datensatz nutzen.

In einer weiteren, vorteilhaften Ausführungsform kann der erste und/oder zweite Dokumentenserver zu vorgegebenen Zeitpunkten oder fortlaufend angesteuert werden.

Ein Dokumentenserver kann beispielsweise automatisch fortlaufen oder zu vorgegebenen Zeitpunkten mittels des ersten Suchverfahrens und/oder des zweiten Suchverfahrens angesteuert werden. Die Suche nach Komponenten für die Konfiguration eines technischen Systems kann vorzugsweise zu vorgegebenen, regelmäßigen Zeitabständen automatisch durchgeführt werden. Dies ermöglicht insbesondere zeitnahe Aktualisierungen und/oder Verbesserungen von Komponenten.

In einer weiteren, vorteilhaften Ausführungsform kann
- eine Funktionalität und/oder eine Ausgestaltung der Komponente anhand einer vorgegebenen Prüfroutine geprüft und/oder anhand der Implementierungs- und/oder Ausführungsinformation aus dem zweiten Textdatensatz ermittelt werden,
- ein Prüfergebnis ausgegeben werden
   und
- anhand des Prüfergebnisses eine Güte der Komponente ermittelt werden.

Vorzugsweise kann eine Funktionalität und/oder eine Ausgestaltung der gefundenen Komponente vor einer Integration in das technische System geprüft werden. Vorzugsweise können für die Durchführung der Prüfung notwendige Informationen über eine Funktionalität und/oder einer Ausgestaltung aus der Implementierungs- und/oder Ausführungsinformation eines der Komponente zugeordneten zweiten Textdatensatzes abgeleitet werden. Alternativ kann der zweite Textdatensatz eine Prüfroutine umfassen oder es kann eine Prüfroutine vorgegeben werden. Eine Prüfroutine für eine Software-Komponente kann beispielsweise ein Testprogrammcode sein. Vorzugsweise kann der Testprogrammcode mit vorgegebenen Testdaten und/oder Daten des technischen Systems ausgeführt werden.

Die Prüfroutine kann beispielsweise eine Prüfinformation umfassen, womit die Funktionalität und/oder die Ausgestaltung geprüft werden kann. Abhängig davon, ob die Komponente der vorgegebenen Prüfinformation genügt, kann eine Güte, z.B. der Leistung, der Komponente ermittelt werden.

Die Prüfroutine kann insbesondere die Funktionalität und/oder Ausgestaltung der Komponente selbst und/oder des gesamten technischen Systems mit integrierter Komponente testen.

In einer weiteren, vorteilhaften Ausführungsform kann
- ein Simulationsmodell des technischen Systems bereitgestellt werden, wobei die Komponente anhand der Implementierungs- und/oder Ausführungsinformation aus dem zweiten Textdatensatz im Simulationsmodell des technischen System integriert werden kann,
- eine rechnergestützte Simulation des technischen Systems mittels des Simulationsmodells durchgeführt werden,
- mittels der Simulation eine Funktionalität und/oder eine Ausgestaltung der Komponente anhand einer vorgegebenen Prüfinformation geprüft werden,
- ein Prüfergebnis ausgegeben werden
   und
- anhand des Prüfergebnisses eine Güte der Komponente ermittelt werden.

Es kann vorzugsweise eine Simulation des technischen Systems durchgeführt werden, wobei die gefundene Komponente integriert im technischen System simuliert wird. Die Integration der Komponente kann vorzugsweise anhand der Implementierungs- und/oder Ausführungsinformation aus dem zweiten Textdatensatz, der der Komponente zugeordnet ist, erfolgen. Es kann beispielsweise ein digitaler Zwilling des technischen Systems erstellt werden, wobei die gefundene Komponente eine im realen System integrierte Komponente ersetzt. Mittels des simulierten technischen Systems kann z.B. die Leistung der gefundenen Komponente geprüft werden und daraus eine Güte der Komponente ermittelt werden. Die Simulation kann beispielsweise auch das virtuelle Testen und/oder Vergleichen verschiedener, gefundener Komponenten erlauben. Insbesondere können eine Funktionalität und/oder eine Ausgestaltung der Komponente selbst und/oder des gesamten technischen Systems mit integrierter Komponente mittels der Simulation geprüft werden.

In einer weiteren, vorteilhaften Ausführungsform können
- mehrere erste Textdatensätze und mehrere zweite Textdatensätze ermittelt werden und daraus mehrere Komponenten ermittelt werden,
- eine Funktionalität und/oder eine Ausgestaltung der Komponenten untereinander anhand der jeweiligen Implementierungs- und/oder Ausführungsinformation aus den jeweiligen zweiten Textdatensätzen nach einem vorgegebenen Bewertungskriterium verglichen werden,
- anhand des Vergleichsergebnisses kann jeweils eine Güte für die Komponenten abhängig von der Implementierungs- und/oder Ausführungsinformation ermittelt werden
   und
- die Komponente mit einer höchsten Güte kann für die Konfiguration des technischen Systems selektiert werden.

Mittels des ersten Suchverfahrens können, abhängig von einer vorgegebenen Spezifikation, mehrere erste Textdatensätze gefunden werden, welche jeweils mindestens einen Teil der Spezifikation umfassen. Es kann vorzugsweise mindestens einem Teil dieser ersten Textdatensätze jeweils mindestens ein zweiter Textdatensatz durch das zweite Suchverfahren zugeordnet werden. Daraus können, abhängig von einer vorgegebenen Spezifikation, mehrere Komponenten und entsprechende Implementierungs- und/oder Ausführungsinformation ermittelt werden. Vorzugsweise kann anhand eines vorgegebenen Bewertungskriteriums diejenige Implementierungs- und/oder Ausführungsinformation und zugeordnete Komponente ermittelt werden, welche eine höchste Güte, wie z.B. höchste Leistungsfähigkeit, aufweist.

In einer weiteren, vorteilhaften Ausführungsform kann die Implementierungs- und/oder Ausgestaltungsinformation aus den zweiten Textdatensätzen gegenüber einem vorgegebenen Prüfkriterium geprüft werden, und abhängig vom Prüfergebnis der jeweiligen Implementierungs- und/oder Ausführungsinformation können die ersten Textdatensätze und/oder die zweiten Textdatensätzen sortiert ausgegeben werden.

Vorzugsweise kann eine Liste der durch das erste und/oder zweite Suchverfahren ermittelten ersten und/oder zweiten Textdatensätze erstellt und ausgegeben werden. Eine Liste kann beispielsweise eine Güte, einen Komponententyp, einen Konfigurationsaufwand, einen Integrationsaufwand, einen Verweis auf Ursprung oder Herstellungsort, oder eine Lizenzinformation umfassen. Insbesondere kann die Liste nach einer, von der jeweiligen Implementierungs- und/oder Ausführungsinformation abhängigen, Güte einer Komponente sortiert bereitgestellt werden. Die Güte kann insbesondere anhand eines Prüfkriteriums ermittelt werden. Beispielsweise kann eine Implementierungs- und/oder Ausführungsinformation eine Wertung der Leistung, Geschwindigkeit, Robustheit, Kraft, etc. einer zugeordnete Komponente umfassen. Die Liste kann beispielsweise nach der Wertung einer dieser Eigenschaften der Komponente sortiert ausgegeben werden. Es kann nachfolgend anhand dieser Wertung oder Qualitätseinschätzung der geeignete erste und/oder zweite Textdatensatz und die Komponente für die Konfiguration des technischen Systems selektiert werden.

In einer weiteren, vorteilhaften Ausführungsform kann
- eine Funktionalität und/oder eine Ausgestaltung einer bereits im technischen System integrierten Komponente mit der Funktionalität und/oder der Ausgestaltung der vom ersten Suchverfahren ermittelten Komponente nach einem vorgegebenen Bewertungskriterium verglichen,
   und
- anhand des Vergleichsergebnisses eine Güte der Komponente ermittelt werden.

Insbesondere kann für eine vorgegebene Eigenschaft der bereits integrierten Komponente, wie z.B. Leistung, überprüft werden, ob die mittels des ersten und des zweiten Suchverfahrens gefundene Komponente eine Verbesserung bewirkt.

Die Komponente wird anhand der Implementierungs- und/oder Ausführungsinformation aus dem zweiten Textdatensatz in das technische System integriert. Beispielsweise abhängig von einer ermittelten Güte der Komponente, kann anhand der Implementierungs- und/oder Ausführungsinformation eine Integration in das technische System erfolgen. Insbesondere kann das Ersetzen einer bereits im technischen System vorhandenen Komponente, nach einer Prüfung der gefundenen Komponente erfolgen. Es kann beispielsweise nur eine Komponente, die eine Mindestanforderung an eine Qualität erfüllt, und/oder eine Verbesserung des technischen Systems bewirkt, integriert werden.

In einer weiteren, vorteilhaften Ausführungsform können
- mehrere erste Textdatensätze ermittelt und ausgegeben werden,
- kann ein drittes, auf eine Ähnlichkeitssuche trainierte, Sucherverfahren für die maschinelle Verarbeitung natürlicher Sprache bereitgestellt werden,
- mittels des dritten Suchverfahrens kann ein gemeinsames Muster der ersten Textdatensätze ermittelt werden
   und
- das gemeinsame Muster kann als Spezifikation für ein erneutes Ansteuern des ersten Dokumentenservers mit dem ersten Suchverfahren genutzt werden.

Mittels eines Suchverfahrens für die maschinelle Verarbeitung natürlicher Sprache, das auf Ähnlichkeitssuche, z.B. auf kausale Zusammenhänge, trainiert ist, können gemeinsame Muster von verschiedenen ersten Textdatensätzen ermittelt werden. Mittels dieser Muster, wie z.B. eine gemeinsame Schnittmenge von Stichworten, können vorzugsweise alternative oder naheliegende Textdatensätze gefunden werden, woraus beispielsweise alternative Komponenten abgeleitet werden können. Es kann damit beispielsweise auch eine Verfeinerung der Suche erzielt werden.

Ein weiterer Aspekt der Erfindung betrifft eine Vorrichtung zum rechnergestützten Konfigurieren eines technischen Systems, die derart eingerichtet ist, die Schritte des erfindungsgemäßen Verfahrens durchzuführen.

Des Weiteren betrifft die Erfindung ein Computerprogrammprodukt, das direkt in einen programmierbaren Computer ladbar ist, umfassend Programmcodeteile, die dazu geeignet sind, die Schritte des Verfahrens durchzuführen und ein computerlesbares Speichermedium.

Vorzugsweise umfasst das Computerprogrammprodukt mindestens ein Suchverfahren zum Ansteuern eines Dokumentenservers.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Ausführungsbeispiele des erfindungsgemäßen Verfahrens sind in den Zeichnungen beispielhaft dargestellt und werden anhand der nachfolgenden Beschreibung näher erläutert. Es zeigen:
- Fig. 1: ein erstes Ablaufdiagramm der Verfahrensschritte eines erfindungsgemäßen Verfahrens;
- Fig. 2: ein zweites Ablaufdiagramm der Verfahrensschritte eines erfindungsgemäßen Verfahrens;
- Fig. 3: eine erste Veranschaulichung eines erfindungsgemäßen Verfahrens in schematischer Darstellung;

- Fig. 4: eine weitere Veranschaulichung eines erfindungsgemäßen Verfahrens in schematischer Darstellung;
- Fig. 5: eine weitere Veranschaulichung eines erfindungsgemäßen Verfahrens in schematischer Darstellung;
- Fig. 6: eine weitere Veranschaulichung eines erfindungsgemäßen Verfahrens in schematischer Darstellung.

Einander entsprechende Gegenstände sind in allen Figuren mit den gleichen Bezugszeichen versehen.

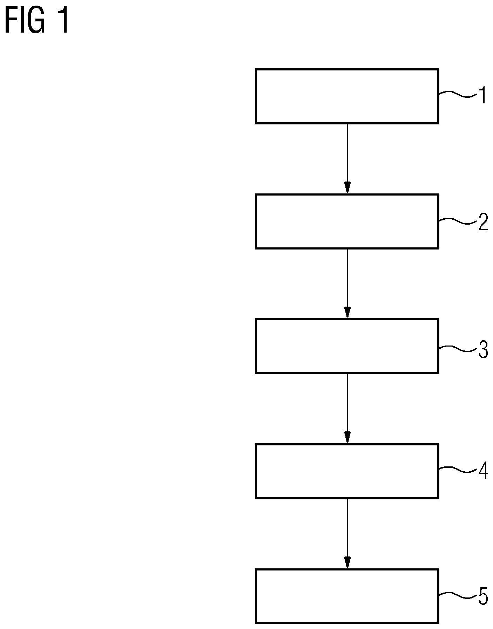

Figur 1 zeigt ein erstes Ausführungsbeispiel eines erfindungsgemäßen Verfahrens zum rechnergestützten Konfigurieren eines technischen Systems als Ablaufdiagramm. Das technische System kann Software- und/oder Hardware-Komponenten umfassen und insbesondere derart konfiguriert sein, dass einzelne Komponenten austauschbar sind. Beispielsweise kann die Leistung des technischen Systems durch Austausch einer Komponente optimiert werden. Es kann auch ein technisches System neu konfiguriert werden, wobei beispielsweise die leistungsstärksten Komponenten verwendet werden können.

Im ersten Schritt 1 des Verfahrens werden ein erstes Suchverfahren und ein zweites Suchverfahren bereitgestellt. Beispielsweise ist das erste Suchverfahren eine Stichwortsuche und das zweite Suchverfahren eine auf Ähnlichkeitssuche trainierte Suchroutine für die maschinelle Verarbeitung natürlicher Sprache. Das erste und zweite Suchverfahren können auch als ein Suchverfahren mit mindestens zwei Ausführungsschritten verstanden werden.

Im zweiten Schritt 2 des Verfahrens wird ein erster Dokumentenserver, welcher eine Vielzahl an Textdatensätzen, z.B. textbasierte Dokumente umfasst, mittels des ersten Suchverfahrens angesteuert. Dabei wird eine vorgegebene Spezifikation, beispielsweise eine Menge an Stichworten, als Sucheingabe eingelesen. Die Spezifikation ist beispielsweise derart für eine Komponente eines technischen Systems gewählt, dass sie diese umschreibt oder Hinweise oder Eigenschaften einer Komponente umfasst. Dies ermöglicht, auch alternative Komponenten zu finden. Mittels des ersten Suchverfahrens wird der erste Dokumentenserver nach mindestens einem ersten Textdatensatz durchsucht, welcher mindestens einen Teil der Spezifikation umfasst. In anderen Worten, anhand der vorgegebenen Spezifikation werden die Textdatensätze auf dem ersten Dokumentenserver durchsucht und mindestens ein Textdatensatz ermittelt, der mindestens einen Teil der Spezifikation umfasst. Beispielsweise kann der erste Dokumentenserver über das Internet angesteuert werden. Wenn ein erster Textdatensatz gemäß der Spezifikation gefunden wird, wird dieser ausgegeben.

Im dritten Schritt 3 des Verfahrens wird anhand des von dem ersten Suchverfahren gefundenen ersten Textdatensatz mindestens eine Komponente für das technische System abgeleitet. Beispielsweise ist eine Komponente und/oder ihre Verwendung oder Funktion im ersten Textdatensatz beschrieben.

Im vierten Schritt 4 des Verfahrens wird ein zweiter, z.B. der erste oder ein anderer, Dokumentenserver mittels des zweiten Suchverfahrens angesteuert. Die zweite Suche erfolgt insbesondere abhängig von dem Suchergebnis der ersten Suche, d.h. abhängig vom gefundenen ersten Textdatensatz. Beispielsweise kann ein Hyperlink oder eine bibliographische Angabe einen ersten Textdatensatz und einen zweiten Textdatensatz verknüpfen, so dass diese Zuordnung oder Verknüpfung mittels des zweiten Suchverfahrens ermittelt werden kann. Abhängig vom ersten Textdatensatz wird ein zweiter Textdatensatz ermittelt, welcher Implementierungs- und/oder Ausführungsinformation für die Komponente umfasst. Vorzugsweise wird das zweite Suchverfahren auf einen Dokumentenserver angewandt, welcher eine Implementierungs- und/oder Ausführungsinformationen, z.B. in Textform und/oder maschinenlesbar, für Komponenten eines technischen Systems umfasst. Wenn ein zweiter Textdatensatz gefunden wird, kann dieser ausgegeben werden.

Die Ausgabe des ersten Suchverfahrens kann zum Beispiel einen Wahrscheinlichkeitswert umfassen, der beispielsweise eine Trefferquote für eine Stichwortsuche repräsentiert. Die Ausgabe des zweiten Suchverfahrens kann insbesondere einen Wahrscheinlichkeitswert, der die Zuordnung des zweiten Textdatensatzes zum ersten Textdatensatz charakterisiert, bereitstellen.

Abhängig von der gewählten Spezifikation, können mehr als ein erster Textdatensatz und/oder mehr als eine Komponente ermittelt werden. Wenn die Spezifikation beispielsweise eine Funktion einer Komponente umfasst, können auch mehrere Komponenten mit derselben Funktion aber unterschiedlicher Beschreibung ermittelt werden. Wenn mehr als ein erster Textdatensatz vom ersten Suchverfahren gefunden wird, kann das zweite Suchverfahren mehrmals durchgeführt werden. Es kann Ziel des zweiten Suchverfahrens sein, einen zweiten Textdatensatz zu ermitteln, der einem ersten Textdatensatz zugeordnet ist und eine Zusatzinformation zu einer, aus dem ersten Textdatensatz abgeleiteten, Komponente umfasst.

Im fünften Schritt 5 des Verfahrens werden der erste und/oder der zweite Textdatensatz und die zugeordnete Komponente für eine Konfiguration des technischen Systems ausgegeben. Beispielsweise kann ein technisches System derart neu konstruiert werden, wobei geeignete Komponenten automatisch gefunden werden. Es kann auch eine im technischen System integrierte Komponente durch eine durch das erfindungsgemäße Verfahren gefundene Komponente ersetzt werden.

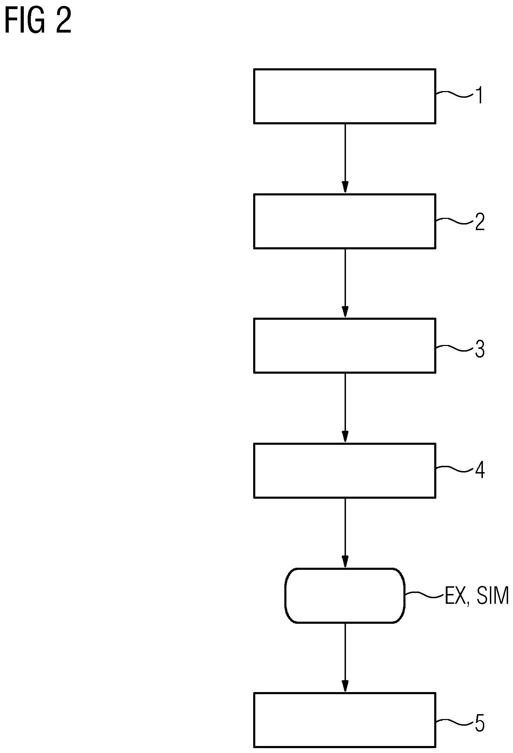

Figur 2 zeigt ein zweites Ausführungsbeispiel eines erfindungsgemäßen Verfahrens als Ablaufdiagramm. Die Schritte 1 bis 5 des Verfahrens können analog zu Figur 1 verstanden werden, wobei vor dem Bereitstellen, Schritt 5, des ersten und/oder zweiten Textdatensatzes und der Komponente zum Konfigurieren des technischen Systems eine rechnergestützte Simulation SIM und/oder eine Prüfung EX der Komponente und/oder des Systems durchgeführt wird.

Beispielsweise kann eine rechnergestützte Simulation SIM des technischen Systems durchgeführt werden, wobei eine gefundene Komponente mittels der zugeordneten Implementierungs- und/oder Ausführungsinformation aus dem zweiten Textdatensatz im technischen System automatisch integriert wird. Es wird eine Simulation des technischen Systems mit integrierter, gefundener Komponente durchgeführt, womit beispielsweise die Funktionalität und/oder eine Ausgestaltung der Komponente und/oder des gesamten technischen Systems getestet werden kann.

Die Komponente kann auch gegenüber einer Prüfvorschrift geprüft werden. Mit der Prüfung EX wird eine Güte der Komponente abhängig von einer Implementierungs- und/oder Ausführungsinformation ermittelt. Abhängig von der Güte der Komponente, kann diese für die Konfiguration des technischen Systems bereitgestellt werden.

Beispielsweise kann die Komponente eine Software-Komponente, wie z.B. ein Algorithmus, sein. Vorzugsweise umfasst der zweite Textdatensatz eine Ausführungsanleitung und eine Prüfvorschrift. Der zweite Textdatensatz kann zum Beispiel eine README-Datei sein, welche neben einer Ausführungsanleitung für den Algorithmus einen Testprogrammcode umfasst, der mittels bereitgestellter oder vorgegebener Testdaten ausführbar ist. Anhand des Testprogrammcodes kann die Software-Komponente geprüft werden. Es kann insbesondere eine Prüfung mit eigenen Daten des technischen Systems anstatt der Testdaten erfolgen, um beispielsweise die Funktionalität der Software-Komponente im technischen System zu überprüfen.

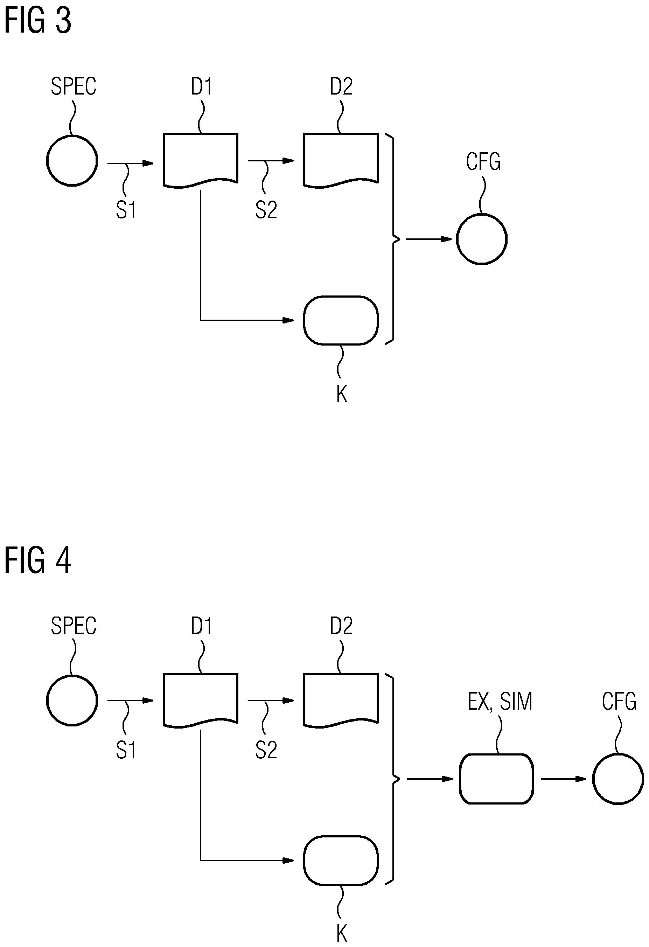

Figur 3 zeigt ein weiteres Ausführungsbeispiel eines erfindungsgemäßen Verfahrens in schematischer Darstellung. Ausgehend von einer vorgegebenen Spezifikation SPEC, wie z.B. Stichworte oder mindestens ein Teil eines vorgegebenen Textdatensatzes, wird mittels des ersten Suchverfahrens ein erster Textdatensatz D1 auf einem Dokumentenserver ermittelt.

Der Dokumentenserver kann beispielsweise ein Archiv oder eine Bibliothek sein und über das Internet angesteuert werden. Beispielsweise kann ein Webseiten-Archiv, wie der Preprint-Server "ArXiv.org" angesteuert werden. Die Spezifikation SPEC umfasst vorzugsweise Eigenschaften einer gesuchten Komponente für ein technisches System, wie z.B. einen Anwendungszweck und/oder eine Funktion und/oder eine Schnittstelleninformation und/oder einen Standard.

Für eine Software-Komponente, wie z.B. ein Maschinenlernalgorithmus, kann die Spezifikation SPEC einen Standard, wie z.B. einen Benchmark-Datensatz, umfassen. Ein Benchmark-Datensatz gibt beispielsweise einen Hinweis darauf, auf welche Funktion ein Maschinenlernalgorithmus trainiert wird. Die Spezifikation SPEC kann beispielsweise auch eine Schnittstellenvorgabe umfassen, die beispielsweise Eingabe- und Ausgabedatenformate spezifiziert. Es kann Ziel der Suche nach einem ersten Textdatensatz D1 und einer Komponente K für ein technisches System gemäß der Erfindung sein, einen alternativen oder leistungsstärkeren Maschinenlernalgorithmus zu finden, der mit demselben oder einem ähnlichen Benchmark-Datensatz trainiert wird oder dieselbe Schnittstellenvorgabe erfüllt.

Für eine Hardware-Komponente, z.B. Steuermodul, kann die Spezifikation SPEC beispielsweise eine Funktion, z.B. Steuerung oder Antrieb eines Geräts, umfassen. Es kann mittels des ersten Suchverfahrens S1 ein erster Textdatensatz D1 gesucht werden, welcher beispielsweise ein alternatives Steuermodul beschreibt.

Die Komponente kann beispielsweise auch eine Software-Komponente eines Digitalen Zwillings sein, welche mit einer entsprechenden Hardware-Komponente, z.B. über den ersten Textdatensatz D1 und/oder den zweiten Textdatensatz D2, verknüpft ist.

Anhand des gefundenen ersten Textdatensatzes D1 kann eine Komponente K ermittelt werden. Kann kein erster Textdatensatz D1 und/oder keine Komponente K ermittelt werden, kann beispielsweise die Spezifikation SPEC verändert und eine erneute Suche angestoßen werden. Ausgehend vom ersten Textdatensatz D1 wird mittels eines zweiten Suchverfahrens S2 mindestens ein zweiter Textdatensatz D2 ermittelt, welcher vorzugsweise eine Implementierungs- und/oder Ausführungsinformation der Komponente K umfasst.

Für eine Software-Komponente kann die Implementierungs- und/oder Ausführungsinformation beispielsweise eine Anleitung zum Kompilieren des Programmcodes, Angaben zu Abhängigkeiten von anderen Softwarepaketen oder Angaben zu verwendbaren Datensätzen oder zu Schnittstellen oder zur Programmiersprache umfassen.

Für eine Hardware-Komponente kann die Implementierungs- und/oder Ausführungsinformation beispielsweise eine Anleitung zum Integrieren oder Anpassen, Angaben zu Schnittstellen, zur Energieversorgung oder zu physikalischen Größen, wie z.B. Temperaturbereiche für Bauelemente, umfassen.

Der zweite Textdatensatz D2 kann beispielsweise durch einen Verweis im ersten Textdatensatz D1 auf den zweiten Textdatensatz S1 ermittelt werden, wobei das zweite Suchverfahren S2 derart ausgebildet ist, diesen Verweis zu identifizieren. Beispielsweise kann mittels des zweiten Suchverfahrens S2 ein web-basierter Dokumentenserver, der Repositories umfasst, wie z.B. "GitHub", für Softwaresysteme angesteuert werden. Das zweite Suchverfahren S2 kann auch ein Word-Embedding-Verfahren sein, womit beispielsweise semantische Zusammenhänge aus dem ersten Textdatensatz D1 genutzt werden, um einen zweiten Textdatensatz zu ermitteln, der dem ersten Textdatensatz D1 zugeordnet werden kann. Dies ermöglicht beispielsweise alternative Implementierungs- und/oder Ausführungsinformation für die Komponente zu finden.

Der erste und/oder zweite ermittelte Textdatensatz, D1 und D2, und die Komponente K werden für eine Konfiguration CFG des technischen Systems bereitgestellt. Eine Konfiguration CFG kann eine Aktualisierung oder eine Verbesserung des technischen Systems oder eine Anfertigung eines neuen technischen Systems sein.

Mittels des erfindungsgemäßen Verfahrens kann vorzugsweise automatisch eine neue oder alternative oder verbesserte Komponente für eine Konfiguration CFG eines technischen Systems gefunden werden. Vorzugsweise kann die Suche mittels des ersten und des zweiten Suchverfahrens S1, S2 zu vorgegebenen Zeitpunkten oder fortlaufend erfolgen.

Figur 4 zeigt ein weiteres Ausführungsbeispiel eines erfindungsgemäßen Verfahrens. Entsprechende Schritte sind analog zur Darstellung in Figur 3 zu verstehen. Nach einer erfolgreichen Suche nach mindestens einem ersten Textdatensatz D1, einer Komponente K und einem zweiten Textdatensatz D2 und vor der Konfiguration CFG des technischen Systems, kann eine Simulation SIM und/oder eine Prüfung EX der zu integrierenden Komponente K durchgeführt werden.

Die Prüfung EX kann zum Beispiel die Funktionalität und/oder eine Ausgestaltung der Komponente K abhängig von einer Implementierungs-und/oder Ausführungsinformationen testen. Es ist auch möglich, die Komponente K integriert im technischen System zu testen, indem mittels der Implementierungs- und/oder Ausführungsinformation aus dem zweiten Textdatensatz D2 eine automatische Integration der Komponente erfolgt. Für die Prüfung kann vorzugsweise eine Prüfungsroutine bereitgestellt werden. Diese kann beispielsweise aus dem zweiten Textdatensatz D2 ermittelt werden. Alternativ kann die Funktionalität und/oder eine Ausgestaltung der Komponente K aus der Implementierungs- und/oder Ausführungsinformation ermittelt werden.

Abhängig vom Prüfergebnis wird eine Güte für die Komponente K ermittelt. Die Güte kann insbesondere abhängig von einer Implementierungs- und/oder Ausführungsinformation sein, wenn einem ersten Textdatensatz vom zweiten Suchverfahren mehrere zweite Textdatensätze zugeordnet werden. Eine automatische Integration in das technische System kann abhängig von der ermittelten Güte erfolgen.

Eine Güte der Komponente kann alternativ durch eine computergestützte Simulation SIM des technischen Systems ermittelt werden, wobei für die Simulation ein Simulationsmodell des technischen Systems mit integrierter Komponente K bereitgestellt wird. Vorzugsweise kann anhand der Implementierungs- und/oder Ausführungsinformation aus dem zweiten Textdatensatz D2 ein Simulationsmodell bereitgestellt werden, welches die Komponente integriert im technischen System umfasst. Mittels des Simulationsmodells kann eine Simulation des technischen Systems unter verschiedenen Bedingungen durchgeführt werden, so dass z.B. die Leistung der Komponente anhand einer Prüfinformation geprüft werden kann. Die Prüfinformation kann z.B. ein Vergleich mit der Leistung des realen technischen Systems sein. Insbesondere kann die Prüfinformation Kriterien für eine automatische Integration der neu ermittelten Komponente K in das reale technische System umfassen.

Abhängig vom Prüfergebnis der Simulation SIM und/oder der Prüfung EX kann die Komponente anhand der Implementierungs- und/oder Ausführungsinformation aus dem zweiten Textdatensatz D2 automatisch im technischen System konfiguriert werden.

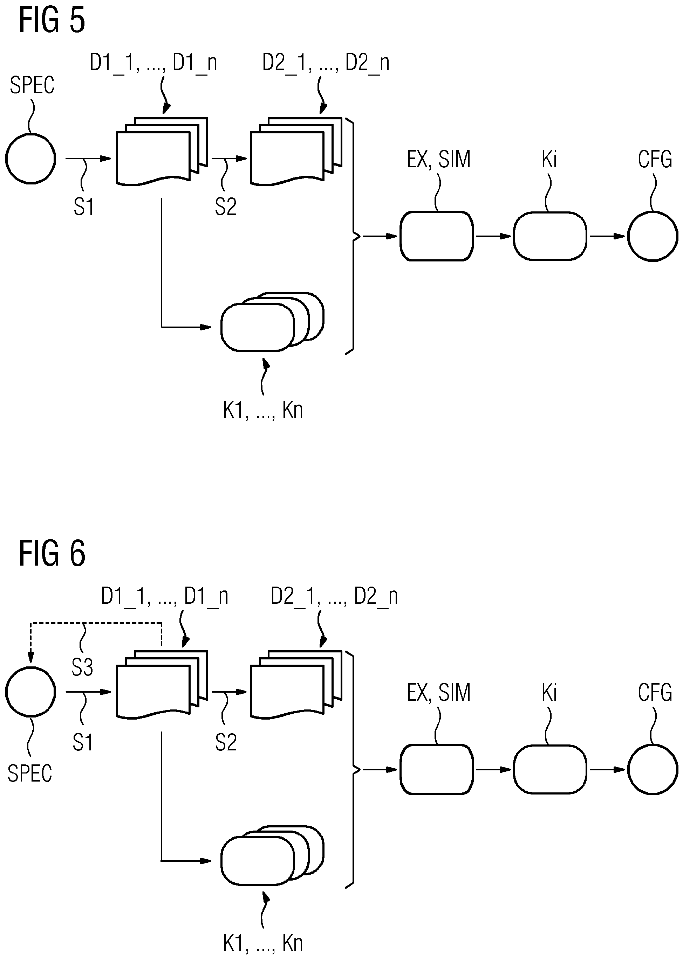

Figur 5 zeigt ein weiteres Ausführungsbeispiel eines erfindungsgemäßen Verfahrens. Es können abhängig von der vorgegebenen Spezifikation SPEC und mittels des ersten Suchverfahrens S1 mehrere erste Textdatensätze D1_1, ... D1_n gefunden und daraus mehrere Komponenten K1, ..., Kn abgeleitet werden. Beispielsweise können die gefundenen ersten Textdatensätze D1_1, ... D1_n jeweils mit einem Wahrscheinlichkeitswert, ausgegeben werden. Ein Wahrscheinlichkeitswert kann beispielsweise angeben, zu welchem Grad eine im ersten Datensatz beschriebene Komponente einer vorgegebenen Spezifikation SPEC entspricht.

Abhängig von diesen ersten Textdatensätzen D1_1, ... D1_n, können mittels des zweiten Suchverfahrens S2 mehrere zweite Textdatensätze D2_1, ..., D2_n ermittelt werden. Es kann jeweils mindestens ein zweiter Textdatensatz einem ersten zugeordnet werden. Vorzugsweise wird die Spezifikation SPEC derart gewählt, dass anhand der ersten Textdatensätze D1_1, ... D1_n eine oder mehrere Komponenten K1, ..., Kn, die einem gemeinsamen Typ zugeordnet werden können, abgeleitet werden. In anderen Worten, für eine allgemeine Spezifikation SPEC können verschiedene Komponenten K1, ..., Kn mit beispielsweise unterschiedlichen Anwendungszwecken ermittelt werden. Das zweite Suchverfahren S2 kann insbesondere derart trainiert sein, anhand z.B. semantischer Zusammenhänge, diejenigen ersten Textdatensätze D1_1, ... D1_n und zweiten Textdatensätze D2_1, ... D2_n gegenseitig zuzuordnen, die einen gleichen Typ einer Komponente K beschreiben. Daraus werden Komponenten K1, ..., Kn ermittelt, welche für die Konfiguration des technischen Systems gemäß der Spezifikation SPEC geeignet sind. Es können als Suchergebnis mehrere Komponenten K1, ..., Kn mit unterschiedlichen Implementierungs- und/oder Ausführungsinformation vorliegen, welche alle gemäß der Spezifikation SPEC für die Konfiguration des technischen Systems geeignet sind.

Mittels einer Prüfung EX und/oder Simulation SIM wird daraus diejenige Komponente Ki selektiert, die die erforderliche oder höchste Güte für eine Konfiguration CFG des technischen Systems aufweist.

Es kann beispielsweise eine Liste von ersten und/oder zweiten Textdatensätzen D1_1, ... D1_n, D2_1, ... D2 n und entsprechenden Komponenten K1, ..., Kn bereitgestellt werden, wobei die Liste beispielsweise Wertzahlen umfasst, die die Güte der Komponenten charakterisiert. Anhand der Liste kann in einfacher Weise diejenige Komponente Ki, die für die Konfiguration des technischen System geeignet ist, automatisch selektiert werden. Außerdem kann die Liste als Nachricht zur Verfügung gestellt werden. Insbesondere kann die Ausgabe zum Konfigurieren des technischen Systems derart gestaltet sein, automatisch die Komponente Ki und die entsprechenden Implementierungs- und/oder Ausführungsinformationen mit der höchsten Güte zu selektieren.

Figur 6 zeigt ein weiteres Ausführungsbeispiel eines erfindungsgemäßen Verfahrens. Entsprechende Schritte sind analog zur Darstellung in Figur 5 zu verstehen. Es kann ein drittes Suchverfahren S3 für die Verarbeitung natürlicher Sprache bereitgestellt werden, welches auf eine Ähnlichkeitssuche trainiert ist. Mittels des dritten Suchverfahrens S3 kann beispielsweise iterativ die Spezifikation SPEC verfeinert werden. Das dritte Suchverfahren S3 kann anhand der vom ersten Suchverfahren gefundenen ersten Textdatensätze D1_1,...,D1_n mindestens ein gemeinsames Muster dieser Textdatensätze ermitteln. Beispielsweise kann anhand von gefundenen wissenschaftlichen Veröffentlichungen mittels des dritten Suchverfahrens S3 ein gemeinsamer Autor ermittelt werden. Das Muster kann als Suchparameter für eine erneute Suche mittels des ersten Suchverfahrens S1, d.h. in Form einer neuen Spezifikation SPEC, genutzt werden. Das dritte Suchverfahren kann auch auf die zweiten Textdatensätze D2 angewandt werden, um daraus gemeinsame Muster zu ermitteln.

## Patentansprüche

1. Verfahren zum rechnergestützten Konfigurieren eines technischen Systems, mit den Verfahrensschritten:
a) Bereitstellen (1) eines ersten Suchverfahrens (S1) und eines zweiten Suchverfahrens (S2),
b) Ansteuern (2) eines ersten Dokumentenservers mittels des ersten Suchverfahrens (S1), wobei:
- eine vorgegebene Spezifikation (SPEC) für eine Komponente eines technischen Systems als Sucheingabe eingelesen wird,
- Textdatensätze, die auf dem ersten Dokumentenserver verfügbar sind, dem ersten Suchverfahren (S1) übermittelt werden,
- die Textdatensätze nach einem ersten Textdatensatz (D1) dieser Textdatensätze, welcher mindestens einen Teil der Spezifikation (SPEC) umfasst, durchsucht werden,
- der erste Textdatensatz (D1) ausgegeben wird,
c) automatisches Ermitteln (3) einer Komponente (K) für das technische System anhand des ersten Textdatensatzes (D1),
d) Ansteuern (4) eines zweiten Dokumentenservers mittels des zweiten Sucherverfahrens (S2), wobei:
- abhängig vom ersten Textdatensatz (D1) ein zweiter Textdatensatz (D2), welcher eine Implementierungs- und/oder Ausführungsinformation für die Komponente (K) umfasst, ermittelt wird,
- der zweite Textdatensatz (D2) ausgegeben wird, wobei das zweite Suchverfahren als ein Verfahren zur maschinellen Verarbeitung natürlicher Sprache konfiguriert wird, wobei damit anhand mindestens eines Teils eines Textdatensatzes ein zu diesem Textdatensatz ähnlicher ermittelt wird,
e) Bereitstellen (5) des ersten Textdatensatzes (D1) und des zweiten Textdatensatzes (D2) und der ermittelten Komponente (K) für eine Konfiguration (C) des technischen Systems,
f) Integrieren der Komponente (K) anhand der Implementierungs- und/oder Ausführungsinformation aus dem zweiten Textdatensatz (D2) in das technische System.

2. Verfahren nach Anspruch 1, wobei das erste Suchverfahren (S1) als ein Verfahren zur maschinellen Verarbeitung natürlicher Sprache konfiguriert wird, wobei damit anhand mindestens eines Teils eines Textdatensatzes ein zu diesem Textdatensatz ähnlicher und/oder zugeordneter Textdatensatz ermittelt wird.

3. Verfahren nach einem der vorhergehenden Ansprüche, wobei die vorgegebene Spezifikation (SPEC) einen Anwendungszweck und/oder eine Funktion und/oder eine Schnittstelle und/oder einen Standard einer Komponente für ein technisches System angibt.

4. Verfahren nach einem der vorhergehenden Ansprüche, wobei der erste und/oder zweite Dokumentenserver zu vorgegebenen Zeitpunkten oder fortlaufend angesteuert wird.

5. Verfahren nach einem der vorhergehenden Ansprüche, wobei
- eine Funktionalität und/oder eine Ausgestaltung der Komponente (K) anhand einer vorgegebenen Prüfroutine geprüft (EX) und/oder anhand der Implementierungs- und/oder Ausführungsinformation aus dem zweiten Textdatensatz (D2) ermittelt wird,
- ein Prüfergebnis ausgegeben wird
und
- anhand des Prüfergebnisses eine Güte der Komponente (K) ermittelt wird.

6. Verfahren nach einem der vorhergehenden Ansprüche, wobei
- ein Simulationsmodell des technischen Systems bereitgestellt wird, wobei die Komponente (K) anhand der Implementierungs- und/oder Ausführungsinformation aus dem zweiten Textdatensatz (D2) im Simulationsmodell des technischen System integriert wird,
- eine rechnergestützte Simulation (SIM) des technischen Systems mittels des Simulationsmodells durchgeführt wird,
- mittels der Simulation eine Funktionalität und/oder eine Ausgestaltung der Komponente (K) anhand einer vorgegebenen Prüfinformation geprüft wird,
- ein Prüfergebnis ausgegeben wird
und
- anhand des Prüfergebnisses eine Güte der Komponente (K) ermittelt wird.

7. Verfahren nach einem der vorhergehenden Ansprüche, wobei
- mehrere erste Textdatensätze (D1_1, ..., D1_n) und mehrere zweite Textdatensätze (D2_1, ..., D2_n) ermittelt werden und daraus mehrere Komponenten (K_1, ..., K_n) ermittelt werden,
- eine Funktionalität und/oder eine Ausgestaltung der Komponenten (K_1, ..., K_n) untereinander anhand einer jeweiligen Implementierungs- und/oder Ausführungsinformation aus einem jeweiligen zweiten Textdatensatz (D2_1, ..., D2_n) nach einem vorgegebenen Bewertungskriterium verglichen werden,
- anhand des Vergleichsergebnisses jeweils eine Güte für die Komponenten (K_1, ..., K_n) abhängig von der Implementierungs- und/oder Ausführungsinformation ermittelt wird
und
- die Komponente (K i) mit einer höchsten Güte für die Konfiguration des technischen Systems selektiert wird.

8. Verfahren nach einem der vorhergehenden Ansprüche, wobei die Implementierungs- und/oder Ausgestaltungsinformation aus den zweiten Textdatensätzen (D2_1, ..., D2_n) gegenüber einem vorgegebenen Prüfkriterium geprüft wird, und abhängig vom Prüfergebnis der jeweiligen Implementierungs- und/oder Ausführungsinformation die ersten Textdatensätze (D1_1, ..., D1_n) und/oder die zweiten Textdatensätzen (D2_1, ..., D2 n) sortiert ausgegeben werden.

9. Verfahren nach einem der vorhergehenden Ansprüche, wobei
- eine Funktionalität und/oder eine Ausgestaltung einer bereits im technischen System integrierten Komponente (K TS) mit der Funktionalität und/oder der Ausgestaltung der vom ersten Suchverfahren ermittelten Komponente (K) nach einem vorgegebenen Bewertungskriterium verglichen wird,
und
- anhand des Vergleichsergebnisses eine Güte der Komponente (K) ermittelt wird.

10. Verfahren nach einem der vorhergehenden Ansprüche, wobei die Komponente (K), abhängig von einer ermittelten Güte in das technische System integriert wird.

11. Verfahren nach einem der vorhergehenden Ansprüche, wobei
- mehrere erste Textdatensätze (D1_1, ..., D1_n) und/oder zweite Textdatensätze (D2_1, ..., D2_n) ermittelt und ausgegeben werden,
- ein drittes, auf eine Ähnlichkeitssuche trainierte, Sucherverfahren (S3) für die maschinelle Verarbeitung natürlicher Sprache bereitgestellt wird,
- mittels des dritten Suchverfahrens ein gemeinsames Muster der ersten Textdatensätze (D1_1, ..., D1_n) und/oder der zweiten Textdatensätze (D2_1, ..., D2_n) ermittelt wird
und
- das gemeinsame Muster als Suchparameter für ein erneutes Ansteuern des ersten Dokumentenservers mit dem ersten Suchverfahren (S1) genutzt wird.

12. Vorrichtung zum rechnergestützten Konfigurieren eines technischen Systems, die derart eingerichtet ist, die Schritte des Verfahrens nach einem der Ansprüche 1 bis 11 durchzuführen.

13. Computerprogrammprodukt, das direkt in einen programmierbaren Computer ladbar ist, umfassend Programmcodeteile, die dazu geeignet sind, die Schritte des Verfahrens nach einem der Ansprüche 1 bis 11 durchzuführen.

14. Computerlesbares Speichermedium mit einem Computerprogrammprodukt nach Anspruch 13.

## Claims

1. Method for the computer-aided configuration of a technical system, comprising the following method steps:
a) providing (1) a first search method (S1) and a second search method (S2),
b) calling on (2) a first document server by means of the first search method (S1), wherein:
- a predetermined specification (SPEC) for a component of a technical system is read in as a search input,
- text data records that are available on the first document server are delivered to the first search method (S1),
- the text data records are searched for a first text data record (D1) of these text data records, which comprises at least part of the specification (SPEC),
- the first text data record (D1) is output,
c) automatically identifying (3) a component (K) for the technical system by using the first text data record (D1),
d) calling on (4) a second document server by means of the second search method (S2), wherein:
- a second text data record (D2), which comprises an item of implementation and/or execution information for the component (K), is identified on the basis of the first text data record (D1),
- the second text data record (D2) is output, wherein the second search method is configured as a method for automatic natural language processing, wherein at least part of a text data record is used thereby to identify a text data record similar to said text data record,
e) providing (5) the first text data record (D1) and the second text data record (D2) and the identified component (K) for a configuration (C) of the technical system,
f) integrating the component (K) into the technical system by using the item of implementation and/or execution information from the second text data record (D2).

2. Method according to Claim 1, wherein the first search method (S1) is configured as a method for automatic natural language processing, wherein at least part of a text data record is used thereby to identify a text data record similar to and/or associated with said text data record.

3. Method according to either one of the preceding claims, wherein the predetermined specification (SPEC) specifies an application and/or a function and/or an interface and/or a standard of a component for a technical system.

4. Method according to one of the preceding claims, wherein the first and/or the second document server is called on at predetermined times or continuously.

5. Method according to one of the preceding claims, wherein
- a functionality and/or an embodiment of the component (K) is tested (EX) by using a predetermined test routine and/or is determined by using the item of implementation and/or execution information from the second text data record (D2),
- a test result is output,
and
- the test result is used to determine a quality of the component (K).

6. Method according to one of the preceding claims, wherein
- a simulation model of the technical system is provided, wherein the component (K) is integrated in the simulation model of the technical system by using the item of implementation and/or execution information from the second text data record (D2),
- computer-aided simulation (SIM) of the technical system is performed by means of the simulation model,
- a predetermined item of test information is used to test a functionality and/or an embodiment of the component (K) by means of the simulation,
- a test result is output,
and
- the test result is used to determine a quality of the component (K).

7. Method according to one of the preceding claims, wherein
- a plurality of first text data records (D1_1, ..., D1_n) and a plurality of second text data records (D2_1, ..., D2_n) are identified, and a plurality of components (K_1, ..., K_n) are identified from said text data records,
- a respective item of implementation and/or execution information from a respective second text data record (D2_1, ..., D2_n) is used to mutually compare a functionality and/or an embodiment of the components (K_1, ..., K_n) according to a predetermined evaluation criterion,
- the comparison result is used to determine a respective quality for the components (K_1, ..., K_n) on the basis of the item of implementation and/or execution information,
and
- the component (K_i) having the highest quality is selected for the configuration of the technical system.

8. Method according to one of the preceding claims, wherein the item of implementation and/or execution information from the second text data records (D2_1, ..., D2_n) is tested with respect to a predetermined test criterion, and, on the basis of the test result for the respective item of implementation and/or execution information, the first text data records (D1_1, ..., D1_n) and/or the second text data records (D2_1, ..., D2_n) are output in a sorted manner.

9. Method according to one of the preceding claims, wherein
- a functionality and/or an embodiment of a component (K_TS) that is already integrated in the technical system is compared with the functionality and/or the embodiment of the component (K) identified by the first search method according to a predetermined evaluation criterion,
and
- the comparison result is used to determine a quality of the component (K).

10. Method according to one of the preceding claims, wherein the component (K) is integrated into the technical system on the basis of a determined quality.

11. Method according to one of the preceding claims, wherein
- a plurality of first text data records (D1_1, ..., D1_n) and/or second text data records (D2_1, ..., D2_n) are identified and output,
- a third search method (S3) for automatic natural language processing, which is trained to perform a similarity search, is provided,
- a common pattern of the first text data records (D1_1, ..., D1_n) and/or the second text data records (D2_1, ..., D2_n) is identified by means of the third search method,
and
- the common pattern is used as a search parameter for calling on the first document server again by means of the first search method (S1).

12. Apparatus for the computer-aided configuration of a technical system, which apparatus is set up to carry out the steps of the method according to one of Claims 1 to 11.

13. Computer program product that can be loaded directly into a programmable computer, comprising program code portions suitable for carrying out the steps of the method according to one of Claims 1 to 11.

14. Computer-readable storage medium having a computer program product according to Claim 13.

## Revendications

1. Procédé de configuration assistée par ordinateur d'un système technique, ayant les stades de procédé :
a) on se procure (1) un premier procédé (S1) de recherche et un deuxième procédé (S2) de recherche,
b) on commande (2) un premier serveur de documents au moyen du premier procédé (S1) de recherche, dans lequel :
- on entre comme entrée de recherche une spécification (SPEC) donnée à l'avance pour un composant d'un système technique,
- on transmet au premier procédé (S1) de recherche des ensembles de données de texte, qui sont disponibles sur le premier serveur de documents,
- on recherche dans les ensembles de données de texte un premier ensemble (D1) de données de texte de ces ensembles de données de texte, qui comprend au moins une partie de la spécification (SPEC),
- on sort le premier ensemble (D1) de données de texte,
c) on détermine (3) automatiquement un composant (K) du système technique à l'aide du premier ensemble (D1) de données de texte,
d) on commande (4) un deuxième serveur de documents au moyen du deuxième procédé (S2) de recherche, dans lequel :
- en fonction du premier ensemble (D1) de données de texte, on détermine un deuxième ensemble (D2) de données de texte, qui comprend une information de mise en œuvre et/ou de réalisation pour le composant (K),
- on sort le deuxième ensemble (D2) de données de texte, dans lequel on configure le deuxième procédé de recherche en procédé de traitement automatique d'un langage naturel, dans lequel on détermine ainsi à l'aide d'au moins une partie d'un ensemble de données de texte, un ensemble de données de texte semblable à celui-ci,
e) on se procure (5) le premier ensemble (D1) de données de texte et le deuxième ensemble (D2) de données de texte et le composant (K) déterminé pour une configuration (C) du système technique,
f) on intègre le composant (K) à l'aide de l'information de mise en œuvre et/ou de réalisation à partir du deuxième ensemble (D2) de données de texte dans le système technique.

2. Procédé suivant la revendication 1, dans lequel on configure le premier procédé (S1) de recherche en procédé de traitement automatique d'un langage naturel, dans lequel on détermine ainsi à l'aide d'au moins une partie d'un ensemble de données de texte un ensemble de données de texte semblable et/ou associé à cet ensemble de données de texte.

3. Procédé suivant l'une des revendications précédentes, dans lequel la spécification (SPEC) donnée à l'avance indique un but d'utilisation et/ou une fonction et/ou une interface et/ou une norme d'un composant d'un système technique.

4. Procédé suivant l'une des revendications précédentes, dans lequel on commande le premier et/ou le deuxième serveur de documents à des instants donnés à l'avance ou en continu.

5. Procédé suivant l'une des revendications précédentes, dans lequel
- on contrôle (EX) une fonctionnalité et/ou une conformation du composant (K) à l'aide d'une routine de contrôle donnée à l'avance et/ou on la détermine à partir du deuxième ensemble (D2) de données de texte à l'aide de l'information de mise en œuvre et/ou de réalisation,
- on sort un résultat du contrôle
et
- on détermine une qualité du composant (K) à l'aide du résultat du contrôle.

6. Procédé suivant l'une des revendications précédentes, dans lequel
- on se procure un modèle de simulation du système technique, dans lequel on intègre le composant (K) à l'aide de l'information de mise en œuvre et/ou de réalisation à partir du deuxième ensemble (D2) de données de texte dans le modèle de simulation du système technique,
- on effectue une simulation (SIM) assistée par ordinateur du système technique au moyen du modèle de simulation,
- au moyen de la simulation, on contrôle une fonctionnalité et/ou une conformation du composant (K) à l'aide d'une information de contrôle donnée à l'avance,
- on sort un résultat du contrôle
et
- on détermine une qualité du composant (K) à l'aide du résultat du contrôle.

7. Procédé suivant l'une des revendications précédentes, dans lequel
- on détermine plusieurs premiers ensembles (D1_1, ..., D1_n) de données de texte et plusieurs deuxièmes ensembles (D2_1, ..., D2_n) de données de texte et on en détermine plusieurs composants (K_1, ..., K_n),
- on compare suivant un critère d'évaluation donné à l'avance une fonctionnalité et/ou une conformation des composants (K_1, ..., K_n) entre elles à l'aide d'une information respective de mise en œuvre et/ou de réalisation à partir d'un deuxième ensemble (D2_1, ..., D2_n) respectif de données de texte,
- on détermine à l'aide du résultat de la comparaison respectivement une qualité des composants (K_1, ..., K_n) en fonction de l'information de mise en œuvre et/ou de réalisation
et
- on sélectionne le composant (K_i) ayant la qualité la plus grande pour la configuration du système technique.

8. Procédé suivant l'une des revendications précédentes, dans lequel on contrôle par rapport à un critère de contrôle donné à l'avance l'information de mise en œuvre et/ou de conformation à partir des deuxièmes ensembles (D2_1, ..., D2_n) de données de texte et, en fonction de résultat du contrôle de l'information respective de mise en œuvre et/ou de réalisation, on sort de manière triée les premiers ensembles (D1_1, ..., D1_n) de données de texte et/ou les deuxièmes ensembles (D2_1, ..., D2_n) de données de texte.

9. Procédé suivant l'une des revendications précédentes, dans lequel
- on compare suivant un critère d'évaluation donné à l'avance une fonctionnalité et/ou une conformation d'un composant (K_TS) déjà intégré dans le système technique à la fonctionnalité et/ou à la conformation du composant (K) déterminés par le premier procédé de recherche,
et
- on détermine une qualité du composant (K) à l'aide du résultat de la comparaison.

10. Procédé suivant l'une des revendications précédentes, dans lequel on intègre le composant (K) au système technique en fonction d'une qualité déterminée.

11. Procédé suivant l'une des revendications précédentes, dans lequel
- on détermine et on sort plusieurs premiers ensembles (D1_1, ..., D1_n) de données de texte et/ou deuxièmes ensembles (D2_1, ..., D2_n) de données de texte,
- on se procure un troisième procédé (S3) de recherche ayant subi un apprentissage pour une recherche de similitude pour le traitement automatique d'un langage naturel,
- au moyen du troisième procédé de recherche on détermine un modèle commun des premiers ensembles (D1_1, ..., D1_n) de données de texte et/ou des deuxièmes ensembles (D2_1, ..., D2_n) de données de texte et
- on utilise le modèle commun comme paramètre de recherche pour une commande renouvelée du premier serveur de documents par le premier procédé (S1) de recherche.

12. Installation de configuration assistée par ordinateur d'un système technique qui est conçu pour effectuer les stades du procédé suivant l'une des revendications 1 à 11.

13. Produit de programme d'ordinateur, qui peut être chargé directement dans un ordinateur programmable, comprenant des parties de code de programme, qui sont propres à effectuer les stades du procédé suivant l'une des revendications 1 à 11.

14. Support de mémoire déchiffrable par ordinateur, comprenant un produit de programment d'ordinateur suivant la revendication 13.
